# EUROPEAN PATENT SPECIFICATION

(11) **EP 3 861 391 B1**
(45) Date of publication and mention of the grant of the patent: **14.12.2022**
(21) Application number: 19790286.9
(22) Date of filing: 28.09.2019
(51) Int. Cl.: G02B 6/44

(54) **OPTICAL FIBER CABLING AND INSTALLATION METHOD THEREOF**
FASEROPTISCHE VERKABELUNG UND INSTALLATIONSVERFAHREN DAFÜR
CÂBLAGE DE FIBRES OPTIQUES ET SON PROCÉDÉ D'INSTALLATION

(30) Priority: 02.10.2018 IT 201800009039
(43) Date of publication of application: 11.08.2021
(73) Proprietor: NEXT SRL, 35100 Padova (IT)
(72) Inventor: TOFFOLI, Andrea, 35123 Padova (IT)
(74) Representative: Bruni, Giovanni
(86) International application number: PCT/IB2019/058258
(87) International publication number: WO 2020/070609

(56) References cited:
- US-A- 4 911 525
- US-A- 5 611 017
- US-A1- 2007 025 668
- US-A1- 2008 187 276

## Description

### Field of application of the Invention

The field of application of the present invention relates to the installation of wiring for telecommunications networks in buildings. The solution identified is particularly suitable for making fiber optic cabling on buildings of various kinds; in particular, in cases in which it is problematic to house the lines inside the walls, or by digging traces on the walls, or by exploiting the presence of possible cavities.

### Prior Art

In recent times, it has become increasingly evident the necessity to wire the buildings, in order to make telecommunication networks suitable to support the transmission of contents, even quite burdensome. This is a requirement strictly linked to the progressive, and increasingly pervasive, computerization of human activities; so that the wiring techniques of buildings do not have a very long history; therefore, they cannot be considered consolidated techniques, and innovations in the sector are desirable.

The first buildings which have been subjected by telecommunication cabling were the buildings used for working or teaching purposes. In these cases, since the passage of cables on external raceways is tolerable from an aesthetic point of view, the problem of preparing the necessary ducts has been frequently solved in a hasty manner. In many cases, moreover, the structure of these buildings requires the presence of false ceilings, or the heights of the rooms allow the creation of floating floors, therefore the laying of the wiring is significantly facilitated.

However, in residential environments, or in other environments where the aesthetic aspect cannot be neglected, the client demands that the wiring and the installations in general be as invisible as possible. Furthermore, the structure of the walls, ceilings and floors does not normally have features that facilitate a hidden passage of cables.

Also for this reason, "wireless" solutions, to support the communication needs present in these environments, have known a very significant development.

In new buildings, the most far-sighted designers try to set up very pervasive infrastructures and cable ducts. However, even buildings of more recent construction can hardly fully satisfy the installation of telecommunications networks in step with the growing needs. The future scenarios, in fact, foresee a very large increase in the number of objects, even in common use, which must be online or accessible with remote commands. Sensors of all kinds can be disseminated in any environment; all the installations necessary for the operation of a building will be characterized by new architectures, based on networks of various components (from switches, to light points, to domotics systems and, in general, the various components of all the building's systems, including plumbing, etc.).

Future scenarios are not deepened here. It is sufficient to observe that it is foreseeable that the techniques currently used and available will not be sufficient to support an increasingly pervasive communication requirement, characterized by the need to continuously add devices, that must be online, to the building network. It is expected that, even considering just a small room, there will be a network capable of involving tens of objects.

The techniques used today to support the communication needs present in a building are based on the presence of hidden diffused cable ducts, obtained through the arrangement of ducts on new buildings or through restructuring interventions; on the construction of walls with cavities, false ceilings or floating floors; as well as the massive use of "wireless" technologies.

However, it is not realistically possible to ensure, only by relying on an "a priori" predisposition strategy, the connection of all devices that over time must be able to be installed in a building. At the same time, it is not even acceptable to have to provide invasive interventions, such as the excavation of traces on the walls, with excessive frequency; nor "wireless" solutions (which in any case require power supply) can cover all the communication needs which, according to many accredited evolutionary scenarios, are expected in the near future.

Therefore, a real problem arises, linked to the wiring that is necessary to support the evolution towards ever more intelligent buildings.

It is therefore necessary to devise new wiring techniques that integrate with the existing infrastructures and, at the same time, allow for the installation, almost everywhere, and with maximum ease of installation, of objects that are connected to a telecommunications network.

Moreover, it is preferable to use the optical transmission technology. In fact, fiber optic cabling guarantees enormous capacities able to fully support the needs increases that can be expected even in the long term. Furthermore, fiber optic transmission technologies are now mature for their use also in the "consumer" market, as well as guaranteeing excellent immunity to disturbances.

The present invention proposes an optical wiring which has prominent installation advantages with respect to the prior art, of which the following patents are mentioned:
- US 5 611 017 A (Minnesota Mining and manufacturing [US]) March 11th, 1997
- US 2008/0187276 A1 (ROBERTS, Reginald [US] et al.) August 7th, 2008
- US 4 911 525 A (HICKS, John W. [US] et al.) March 27th, 1990
- US 2007/0025668 A1 (GREENWOOD, Jody L. [US] et al.) February. 1st, 2007

### Summary of the Invention

The main object of the present invention, therefore, is to indicate a solution for the optical wiring of a building. The indicated wiring must be easy to install and, in particular, it must be able to be installed without the need for invasive building works: it is therefore necessary that the indicated wiring technology does not necessarily require cable ducts, or ducts of various types, to house the laying of the cable. Furthermore, once the installation is completed, this wiring must be substantially invisible, regardless it is laid or not inside a raceway.

A further object of the present invention is to indicate a solution suitable for exploiting the possibility of being installed inside raceways in the event they are already prepared, but it must also be suitable to be installed in such a way as to continue its path even where the possible raceway used did not reach the desired points. The indicated wiring must in fact be suitable to reach, with maximum flexibility, any point on the walls on the ceilings, or on the floors of a building.

Moreover, a further object of the present invention is to allow the use of lines in which the cables can be installed having the least possible number of joints, avoiding, for example, a joint when switching from laying to inside to laying outside the duct, or when it is necessary to separate a transmission flow from a fiber bundle. This last requirement has to do with the ease and efficiency of installation, given that optical junctions are not as trivial as electrical junctions are.

The invention is set out in the appended set of claims.

The main advantage of the present invention consists in the fact that an optical wiring according to the teachings of the present invention satisfies all the main requirements for which it was conceived.

### Breaf Description of the Drawings

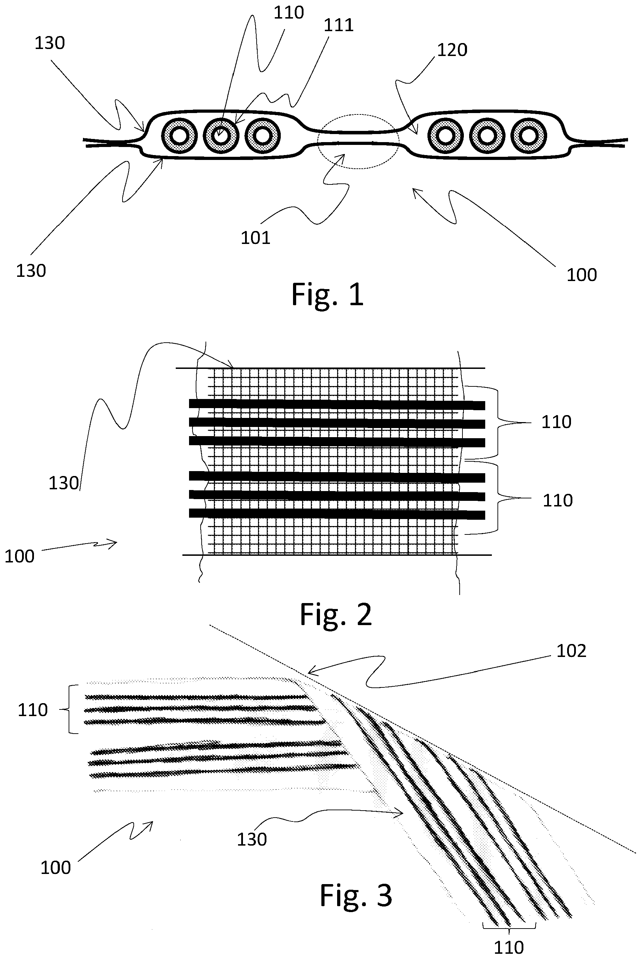

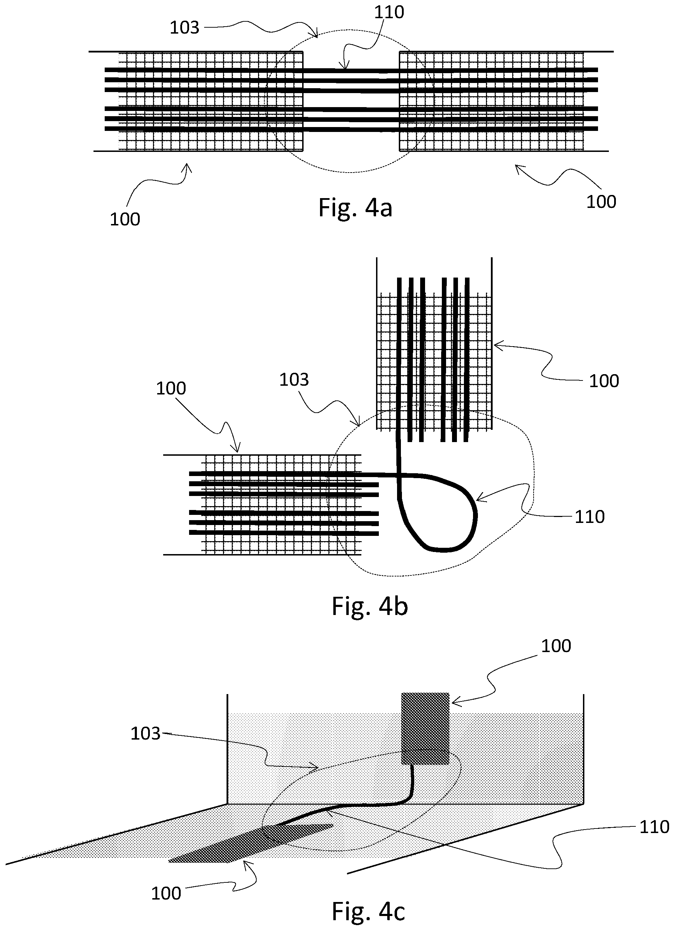

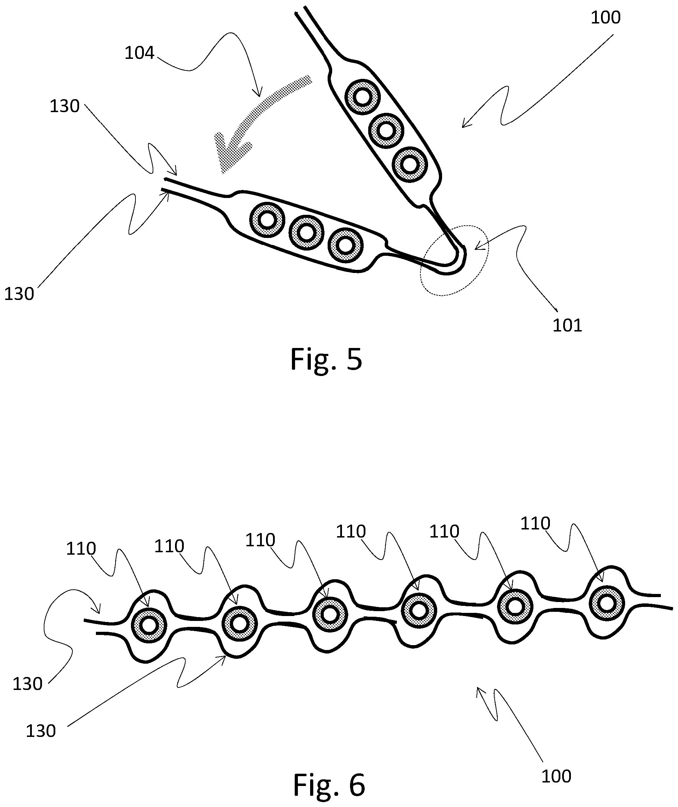

This invention also has further advantages, which will become more evident from the following description, from some examples of practical embodiments which illustrate further details, from the attached claims which form an integral part of the present description, and from the attached figures in which:
✔ Figure 1 schematically shows, in section, a typical implementation form of the optical cable realized according to the teachings of the present invention;
✔ Figure 2 schematically shows a portion of the optical cable as in the embodiment presented in Figure 1, according to a view perpendicular to the plane defined by the strip which constitutes the cable itself;
✔ Figure 3 schematically shows a portion of the optical cable as in the embodiment presented in Figure 2, in which it is shown a conformation that can be assumed by the optical cable realized according to the teachings of the present invention in order to change the direction in the pose;
✔ Figures 4 (4a, 4b and 4c) show some possibilities of laying the optical cable according to the invention, so as to follow different paths;
✔ Figure 5 shows, in a schematic and sectional manner, the implementation form as in Figure 1, in which a conformation that can be assumed by the optical cable realized according to the teachings of the present invention is highlighted, in order to be laid inside a duct;
✔ Figure 6 shows, schematically and in section, another typical embodiment of the optical cable realized according to the teachings of the present invention.

In all the proposed figures a simplified representation is offered, in which the proportions are not realistic. These are figures conceived essentially in order to highlight, each, some characteristic elements; therefore, many details, which do not concern the characteristics that we intend to describe, are omitted or represented in an approximate way.

### Detailed Description

Figure 1 shows a section view of said optical cable according to the teachings of the present invention. Number 100 indicates, as a whole, a typical embodiment of said optical cable according to the invention.

Number 110 indicates the actual optical fibers, in Figure 1 there are shown six of them, but obviously it is possible to make cables with any number of fibers, depending of the needs. Said optical fibers 110 are coated, as usual, with a sheath indicated with the number 111. These sheaths 111, besides performing the protective function, generally also serve to distinguish the various fibers from one another, being normally of different colors. It is also important to underline how fiber optic cables are a technology that allows the creation of extremely thin cables: in fact, the diameter of a fiber optic cable for the applications here considered is of the order of a tenth of a millimeter, or even lower.

The representation of Figure 1 shows a first characteristic of said optical cable 100, which consists in the fact that the various optical fibers which are settled in the cable are arranged side by side, and not grouped in a bunch as typically occurs in optical cables according to the known art.

With the number 130 two containment bands are then indicated; moreover, as shown in the figure, there is a space (which is intentionally wider than that of the actual embodiments, for reasons of explanatory clarity) between the bands 130 and the fibers 110. This space contains a lubricating substance indicated by the number 120. Said lubricating substance 120, typically, can be a gel, an oily substance, or simple paraffin, and has the main function of facilitating the flow of the fibers when the optical cable 100 is to be curved, or when a single fiber has to be partially unthreaded.

The presence of said lubricating substance 120, in which the individual optical fibers 110 are immersed, is of great importance since it allows to easily separate the individual fibers and to make them slide inside the cable 100. As will also be clarified with the help of Figures 4, the possibility of individually managing the single fibers, for some traits, constitutes an essential prerogative of the optical cable 100 according to the invention, since it allows to overcome various installation problems, preserving the fundamental objective of avoiding digs to house the cable.

Ultimately, said containment bands 130 perform a multiple function: they contain and protect the optical fibers 110, maintaining them in their side-by-side positions, they contain the lubricating substance 120 and they provide mechanical resistance to the cable structure. Finally, the view proposed in Figure 1 shows an area of the section in which the containment bands 130 are very close, so as to touch, or almost touch. This zone is designated by the number 101, it is typically formed along the central axis of the strip and, in this area, the fibers 110 are more spaced apart. The purpose of this zone 101 will be clarified in the following, in particular with the aid of Figure 5.

Figure 2 shows a different view of a portion of an optical cable 100 such as that shown in Figure 1. In the proposed view, orthogonal to the plane determined by the bands 130, it can once again be appreciated the side-by-side arrangement of the optical fibers 110 and the surface of a band 130. Said bands 130 have, as already mentioned, a containment function, therefore, for their manufacture, plastic materials such as polypropylene are particularly suitable; material that can be worked into strips with a thickness even less than a tenth of a millimeter, which offers excellent flexibility and excellent containment performance. Moreover, another function of said bands 130 consists in conferring mechanical strength, and this function can be obtained by making a fiberglass weave. Also the fiberglass is a workable material in very thin filaments and, at the same time, extremely resistant to traction. Ultimately, although said bands 130 can be made by choosing from various materials, one of the preferable choices consists in using such polypropylene tapes with a fiberglass weave.

Definitely, a valuable feature of the optical wiring 100 is that it can be made in a shape that makes it extremely thin, with a thickness of a few tenths of a millimeter. Such a thin shape allows it to be laid directly on the surface of a wall, without the need to dig a trace, as is instead necessary for the laying of a raceway suitable for housing the passage of cables. To facilitate installation, the optical wiring 100 is made by gluing at least one of its surfaces. In this way, the strip is made to adhere to the wall in a simple and immediate way.

The application can take place directly on the finished wall or, preferably, by lightly scraping the wall along the laying path so that the thickness, although very small, of the wiring does not protrude. Finally, to make the installation invisible, just cover the cable with a thin layer of plaster or paint. In this regard, it can be observed how the technologies for painting the walls today offer a wide variety of solutions, some of which involve the use of substances that can, or must, be applied creating a certain thickness. All these solutions can be particularly suitable for covering and concealing a wiring according to the teachings of the present invention.

Generally, the optical cables 100 according to the invention have both faces adhesive-coated: in fact, it can be useful that also the outer face is adhesive. This, not only to make it easier to cover the cable even with very thin layers of covering substances (in fact many covering substances adhere better to adhesive surfaces), but also, and above all, because when the laying involves changes of direction, normally it changes the face which must adhere to the wall.

Figure 3 shows the conformation that the optical wiring 100 can assume in correspondence with a change of direction. A very simple way to realize a laying with a change of direction, in fact, consists in bending the strip which constitutes the optical wiring 100 along an oblique line with respect to the longitudinal axis of the strip itself. The direction of this bending line is shown in Figure 3 with a dashed line indicated with the number 102. Depending on the inclination of said bending line 102, it is possible to obtain a variable angle of change of direction in the laying. For example, with a bending line 45° inclined to the strip axis, the laying direction forms a right angle. In general, the angle of change of the direction of the laying will be equal to 180° minus the double of the angle of inclination of the bending line with respect to the axis of the strip.

It is clear that after each bending, the side of the strip in contact with the laying wall changes, therefore it is advisable that both sides are adhesive-coated.

In a preferred implementation, in fact, both sides of the strip constituting an optical cable 100 are adhesive-coated, and covered by a thin protective film (as normally occurs to protect the adhesive surfaces) which is removed where it is necessary to stick somewhere or to adhere to some particular substance.

It is observed that the optical fibers have limitations on the curvature angle that is allowed for the transmission properties to be preserved. Therefore, the real fold cannot be performed with a "sharp" bending. This constraint on the fold imposes that, in correspondence with the changes of direction, the wiring 100 occupies a thickness significantly greater than twice the thickness of the laid wiring; this is because the two overlapping flaps cannot generally be crushed one on top of the other due to the bending, otherwise the fold would generate a " sharp" bending that would break the fibers.

However, this constraint can be easily managed without significantly compromising the advantages of the invention. In fact, it is enough to erode the laying wall more, but only for the points where the change of direction is made, so as to house the greater thickness. Furthermore, this way of performing direction changes allows to manage the bending radius control with greater precision; in fact, all the individual fibers 110 that make up the optical wiring 100 are subject to the same bend (which can be controlled), which is not the case in cables where the individual fibers are bunched together.

Finally, the fact that individual fibers 110 are immersed in a lubricating substance, means that, in correspondence of bends, these are not subjected to torsion, i.e. another type of stress which is preferable to avoid in an optical fiber.

Therefore, even if only for the points of change of direction, the installation as shown in Figure 3, although very simple and quick to perform, determines a thickness that requires excavation in the wall. Moreover, it subjects the optical fibers 110 to a curvature at the limits of the allowed radius, with risks of breakage, or with performance degradation. Well, the optical cable 100 according to the invention, thanks to its specific constitutive characteristics, is also suitable for a laying that preserves adherence to the laying surface with negligible thickness even at changes of direction, without the need for excavation.

Moreover, this installation is able to follow complex paths that have sharp corners and edges, all without subjecting the fibers to curvatures that could cause problems. These laying methods are illustrated with the help of figures 4.

Figure 4a shows a piece of optical cable 100, like the one shown in Figure 2, in which the two containment bands (and obviously also the lubricating substance) have been removed along a short trait. This trait of optical cable is shown inside the area delimited by a dotted line, and it is indicated with the number 103. In the trait 103, therefore, the optical cable is made up of only optical fibers 110, which substantially maintain their side-by-side position since they are kept in this position by the overall structure of the optical cable 100 which, in the rest of its length continues to have the containment bands which confer it structure and compactness.

It is noted that the operation of releasing the optical fibers 110 along the short trait 103, is an operation made particularly easy by the fact that the optical fibers 110 are kept separate thanks to the particular shape of the optical cable 100 (for example, they are not interlaced). In fact, it is particularly simple, using suitable tools, to cut accurately the containment bands, without risking to damage to the optical fibers 110.

Once the optical fibers 110 have been released in the trait 103, for a sufficient length, it is possible to lay the optical cable as a whole, maintaining strict adherence to the surfaces to which it is applied, making it perform almost all the paths which may be required in a generic pose.

In Figure 4b, an example of laying on a flat surface is shown, according to a path that requires a sudden change of direction. Figure 4b shows how one of the optical fibers 110 can be curved in the trait 103, freed from the containment belts, without ever departing from the flat surface, assuming a very gentle curvature (thus avoiding any risk of damaging the fiber) and, at the same time determining a sharp change of direction.

Obviously, this kind of installation requires that the single fibers can be handled somehow independently, without being strictly enclosed in a single bunch: this is the main reason why, in correspondence with such changes of direction it is necessary to free the individual fibers, for a trait 103 of sufficient length, from the other elements which constitute the cable. Moreover, the presence of the lubricating substance 120 also allows, if it is necessary to adjust the length of the trait of free fibers, to let the individual fibers slide slightly off the part of the optical cable 100.

Figure 4c shows another installation case that may present potential problems. It is the case of a pose that must follow a sharp edge determined by two incident planes: how can they be two walls, or a wall and a ceiling, or a wall and a floor.

In this case too, the laying can be carried out by releasing the individual fibers 110 for a section 103. In this way, each individual fiber, lying on a first plane, can be curved until it runs, for a little bit, along the edge, and then continue laying on the second floor, curving gently until it reaches the desired direction.

In general, Figures 4 show how the problem of following tortuous paths (with sharp changes in direction) can be solved, even using fibers having limitations on the radius of curvature. This can be done by posing directly the individual fibers along short stretches, in correspondence with the areas where changes of direction are required. Therefore, the optical cable 100, realized according to the teachings of the invention, has characteristics that facilitate the operation of freeing the individual fibers 110 for short stretches, removing the containment belts which keep the optical fibers 110 flattened, and benefiting from the effect of the lubricating substance that keeps the individual fibers well insulated and facilitates their sliding. This advantage is not trivial when compared to the installation in the duct. In fact, the ducts designed to accommodate fiber optic cables, in order to respect the curvature radius even at edges, must be housed on traces dug very deeply on the walls, making the laying operation very invasive.

The optical cable 100 according to the invention, on the other hand, is suitable for any type of installation, maintaining its fundamental prerogative which is that of being suitable for adhering above the laying surface. Moreover, since it is extremely thin, it can subsequently be covered and made invisible by means of a covering finishing layer, such as, for example, a suitable painting.

Figure 5 shows a further configuration that can be assumed by the optical cable 100. The view proposed in Figure 5 shows the same section of the optical wiring 100 proposed in Figure 1 with the difference that the strip that constitutes the optical cable 100 is bent along a longitudinal direction. In this case, the fold does not affect the optical fibers 110, and is practiced in correspondence of the zone, indicated with the number 101, in which the two containment bands 130 are closer because they do not include (in that zone precisely) optical fibers.

The central zone of the strip which constitutes the optical cable 100, therefore, is arranged so that a fold can be easily made longitudinally. In Figure 5, the number 104 indicates the angle formed by the two edges of the strip which constitutes the optical cable 100 when this is folded longitudinally as explained. In this case, the angle 104 may be closed, and the fold may also be very sharp, as it does not affect the optical fibers.

Taking advantage of the fact that the surface inside the angle 104, formed by the strip which constitutes the optical cable 100, when this is folded as explained, is adhesive, the optical cable 100 can remain permanently bent longitudinally and can be made more compact (no longer flat in the shape of a ribbon). In this new configuration it can easily be used as a normal cable, suitable to be passed inside traditional raceways.

Obviously, in the case of particularly wide optical cables, or with a greater number of fibers, this longitudinal folding operation can take place in more than one zone, with the aim of reaching a compact conformation suitable for being inserted in a raceway.

In a typical application, the optical cable 100 can be laid in its flattened shape for a more or less long distance, making it adhere to a wall, until it reaches a point (for example a box with switches) from which depart one or more raceways. From that point on, if necessary, the optical cable 100 can continue its laying inside a raceway, in its folded conformation as indicated in Figure 5.

The two laying methods:
a) laying inside a raceway, and
b) flat laying in adherence on a surface,
they can be carried out in continuity, even alternating several times, without having to interrupt the optical cable, and provide for a junction where it ends the installation by direct application in adherence on the wall, and begins the laying inside the duct, or vice versa.

From what has been said so far, it therefore clearly emerges that the optical cable 100, according to the teachings of the present invention, defines a real laying method for installing a cable for data transmission on optical fiber, between a generic point "A" and another generic point "B", positioned on a wall or on the floor, or on the ceiling of an generic environment.

First, this laying method foresee the identification of the path between point "A" and point "B". As will also be clear from the following, the choice of the path does not present particular constraints and, in the most general case, this path is partly defined by existing ducts or channels, which can be used for the installation of the optical cable 100, and in part runs along paths not predisposed for laying the optical cable 100.

In this generic case, the installation takes place in the following way.
✔ In the sections in which a conduit or raceway is present, the optical cable 100 according to the teachings of the present invention is folded longitudinally (along one or more longitudinal guiding lines, depending on its width) and inserted inside said conduit or raceway.
✔ In the sections in which there is no provision, the optical cable 100 according to the teachings of the present invention is made to adhere, in its flat and extended configuration (which is also the configuration of minimum thickness) to the surface where the laying has to take place.
✔ In the laying areas where the optical cable 100 is laid in adherence to a surface, and therefore not inside a conduit or a raceway, and in which the laying path includes abrupt changes of direction, or must follow sharp edges, the individual optical fibers 110, contained in the optical cable 100, are freed by removing the containment bands 130, only to a limited extent to the trait 103 necessary to perform the aforementioned changes of direction. In this way, said individual optical fibers 110, so released, can be laid according to the indications previously illustrated with the aid of Figures 4, and can be adapted to follow all the main types of path.
✔ In the sections in which the optical cable 100 is laid in adherence to a surface, this is then covered with a generic covering layer to make it invisible. Typically, thin layers of plaster or various types of materials used for painting.

Finally, it is reiterated that this laying method does not require that the optical cable 100 be sectioned, between the point "A" and the point "B", in correspondence with the points where the type of laying changes, from laying in the duct to laying in adherence. Indeed, since typically the path sections in conduits terminate on special termination boxes, the point of the optical cable 100 in which the conformation changes, from flat to longitudinally folded, can easily remain housed inside such termination boxes.

The just described invention can then be proposed in many other variants; among these, for example, the variant presented in Figure 6 is mentioned.

In the variant shown in Figure 6 the individual fibers 110 appear to be more separate from each other and, above all, the two bands 130 wind them individually, approaching each other, almost touching one another, between each pair of adjacent fibers 110.

This variant represents a useful example to show how the strip composing the optical cable 100 can have various zones arranged for the longitudinal fold, and not only a central one, as indicated in Figures 1 and 5. Moreover, the areas of the strip in which the two containment bands 130 are closer, separating more clearly two contiguous optical fibers 110, are areas in which it is also facilitated to cut the strip longitudinally in order to separate the path of one or a group of fibers 110 from the others.

With respect to this latter need, to select one or more fibers 110 from the initial bouquet, it is observed that also the presence of the lubricating substance 120, in which the optical fibers 110 are immersed, further facilitates this operation.

Ultimately, compared to traditional optical cables, the optical cable 100 according to the teachings of the present invention, appears much more suitable to support the growing cabling needs that arise according to the more plausible evolutionary scenarios.

In summary, the present invention indicates a new technique that allows the laying of a wiring even in the absence of prepared raceways, without determining an aesthetic impact. At the same time, the optical cable 100 can also be passed inside the normal raceways that are still present in many sections. Furthermore, the optical cable 100 according to the teachings of the present invention can easily separate single fibers from bundles containing many, so as to facilitate the creation of networks with very varied and intricate topologies, limiting as much as possible the number of joints.

In general, then, the present invention lends itself to numerous variants while maintaining the claimed prerogatives. In fact, it can be developed in different sizes and including different amounts of optical fibers; and the invention itself can be carried out partially as some details described can be replaced by technically equivalent elements.

In particular, and as previously mentioned, the use of specific technologies and materials is not an essential part of the present invention. Therefore, if in the future the materials and adhesives sector were to make available new technologies, more advantageous than those mentioned in the preferred implementations, so as to implement the present invention more efficiently, further improvements could be made without thereby modifying the inventive nature and the principles that inspired the invention itself.

Other possible variants for the present invention may derive, in addition to the evolution of the technologies that constitute it, also from the evolution of the sector of optical components; so that the cables indicated in the invention could, for example, integrate components of varying complexity and also perform other functions, additional to the transmission function only.

Therefore, especially in the context of such evolutionary scenarios, the invention lends itself to incorporating and supporting further development and improvement efforts, capable of improving the performance of the system described. Therefore, many further developments can be made by the man skilled in the art without departing from the scope of the invention as it results from the present description and from the appended claims, which form an integral part of the present description; or, if these developments are not included in the present description, they can be the subject of further patent applications associated with the present invention, or dependent on it.

## Claims

1. Optical cable (100) in the form of a flattened strip, in which a variable number of optical fibers (110) for telecommunication are placed side by side, said optical fibers (100) are included between two containment tapes (130) and are immersed in a substance with lubricating properties (120),and such strip-shaped optical cable (100) is **characterized in that** at least one of the outer surfaces of said strip-shaped optical cable (100) is adhesive, and said optical cable (100) is suited to be bent longitudinally, along directions parallel to said optical fibers (110) in correspondence of a zone where said containment tapes (130) are very close, so as to touch, or almost touch, and, when said optical cable (100) is folded, it is kept permanently folded for the effect of the adhesive surface which remains inside the fold, and this folded configuration of said optical cable (100) is suitable for being inserted into a conduit.

2. Optical cable (100) according to claim 1 wherein said two containment tapes (130) are, at least partly, made of polypropylene.

3. Optical cable (100) according to claim 1 wherein said two containment tapes (130) comprise a texture made with tensile-resistant filaments.

4. Optical cable (100) according to claim 3 wherein said texture is made with fiberglass filaments.

5. Optical cable (100) according to claim 1 wherein said substance with lubricating properties (120) is a gel or paraffin.

6. Optical cable (100) according to claim 1 wherein said optical fibers (110) for telecommunication, placed side by side, are separated by different distances, so that said optical cable (100) facilitates the longitudinal folding along directions defined by the areas of greater spacing between said optical fibers (110).

7. Method of installation of said optical cable (100), according to any of the preceding claims, **characterized by** the following steps:
a. defining an installation path between a generic point "A" and a generic point "B";
b. in the sections of said installation path, in which there is a conduit, folding said optical cable (100) longitudinally, along one or more longitudinal directions, and it remains permanently folded for the effect of the adhesive surface which remains inside the fold, and then inserting it inside said conduit;
c. in the sections in which no predisposition is present, maintaining said optical cable (100) in its flat and extended configuration, and making it to adhere to the surface where the installation must take place according to the path defined at step "a.";
d. in the installation zones included in the sections in which the optical cable (100) is laid in adherence to a surface, and therefore not inside a conduit, and in which the path of installation foresees abrupt changes of direction, or must follow sharp edges, freeing the single optical fibers (110), contained in the optical cable (100), by removing the containment tapes (130)
e. said single optical fibers (110), once freed, are laid individually, adapting themselves to the type of path envisaged and maintaining adherence to the laying surface;
f. in the sections in which said optical cable (100) is laid in adherence to a surface, covering said optical cable (100) with a generic thin covering layer which makes it substantially invisible.

## Patentansprüche

1. Optisches Kabel (100) in Form eines abgeflachten Streifens, in dem eine variable Anzahl optischer Fasern (110) für die Telekommunikation nebeneinander angeordnet sind, wobei die optischen Fasern zwischen zwei Einschlussbändern (130) eingeschlossen und in eine Substanz mit Schmiereigenschaften (120) eingetaucht sind, wobei ein solches streifenförmiges optisches Kabel (100) ist **dadurch gekennzeichnet, dass** mindestens eine der Außenflächen des streifenförmigen optischen Kabels (100) haftend ist und das optische Kabel (100) geeignet ist in Längsrichtung entlang Richtungen parallel zu den optischen Fasern (110) in Übereinstimmung mit einem Bereich gebogen werden, wo die Einschlussbänder (130) sehr nahe beieinander liegen, so dass sie sich berühren oder fast berühren, und, wenn das optische Kabel (100) gefaltet ist, es für die Wirkung der Klebefläche, die innerhalb der Faltung verbleibt, dauerhaft gefaltet gehalten wird, und diese gefaltete Konfiguration des optischen Kabels (100) geeignet ist, in eine Leitung eingeführt zu werden.

2. Optisches Kabel (100) nach Anspruch 1, wobei die zwei Einschlussbänder (130) zumindest teilweise aus Polypropylen hergestellt sind.

3. Optisches Kabel (100) nach Anspruch 1, wobei die beiden Einschlussbänder (130) eine Textur aufweisen, die aus zugfesten Filamenten hergestellt ist.

4. Optisches Kabel (100) nach Anspruch 3, wobei die Textur aus Glasfaserfilamenten hergestellt ist.

5. Optisches Kabel (100) nach Anspruch 1, wobei die Substanz mit Schmiereigenschaften (120) ein Gel oder Paraffin ist.

6. Optisches Kabel (100) nach Anspruch 1, wobei die nebeneinander angeordneten optischen Fasern (110) für die Telekommunikation durch unterschiedliche Abstände getrennt sind, so dass das optische Kabel (100) das Falten in Längsrichtung entlang Richtungen erleichtert, die durch die Bereiche von größeren Abstands zwischen den optischen Fasern (110) definiert sind.

7. Verfahren zur Installation des optischen Kabels (100) nach einem der vorhergehenden Ansprüche, **gekennzeichnet durch** die folgenden Schritte:
a. Definieren eines Installationspfads zwischen einem generischen Punkt "A" und einem generischen Punkt "B";
b. in den Abschnitten des Installationspfads, in denen sich eine Leitung befindet, Falten des optischen Kabels (100) in Längsrichtung entlang einer oder mehrerer Längsrichtungen, wobei es dauerhaft gefaltet für die Wirkung der Klebefläche verbleibt, die innerhalb der Falte verbleibt, und dann es sie in die Leitung einführt;
c. in den Abschnitten, in denen keine Prädisposition vorhanden ist, Halten des optischen Kabels (100) in seiner flachen und gestreckten Konfiguration und dafür sorgen, dass es an der Oberfläche haftet, wo die Installation gemäß dem in Schritt "a" definierten Pfad erfolgen muss;
d. in den zu den Abschnitten gehörenden Installationsbereichen, in denen das optische Kabel (100) aufliegend an einer Fläche, also nicht innerhalb einer Leitung verlegt wird und in denen der Installationspfad abrupte Richtungsänderungen vorsieht oder scharfen Kanten folgen muss, Freigeben der einzelnen optischen Fasern (110), die in dem optischen Kabel (100) enthalten sind, durch Entfernen der Einschlussbänder (130);
e. die einzelnen optischen Fasern (110), sobald sie freigelegt sind, einzeln verlegt werden, wobei sie sich selbst an die Art des vorgesehenen Pfads anpassen und an der Verlegungsfläche haften bleiben;
f. in den Abschnitten, in denen das optische Kabel (100) an einer Oberfläche haftend verlegt ist, Bedecken des optischen Kabels (100) mit einer generischen dünnen Deckschicht, die es im Wesentlichen unsichtbar macht.

## Revendications

1. Câble optique (100) en forme de bande aplatie, dans lequel un nombre variable de fibres optiques (110) de télécommunication sont placées côte à côte, lesdites fibres optiques étant comprises entre deux rubans de confinement (130), et baignant dans une substance (120) avec des propriétés lubrifiantes, et un tel câble optique (100) en forme de bande est **caractérisé en ce qu'**au moins une des surfaces externes dudit câble optique (100) en forme de bande (100) est adhésive, et ledit câble optique (100) est adapté pour être plié longitudinalement, selon des directions parallèles auxdites fibres optiques (110) en correspondance d'une zone où lesdites bandes de confinement (130) sont très proches, de manière à se toucher, ou presque se toucher, et, lorsque ledit câble optique (100) est plié, il est maintenu replié en permanence pour l'effet de la surface adhésive qui reste à l'intérieur du pli, et cette configuration repliée dudit câble optique (100) est apte à être insérée dans un conduit.

2. Câble optique (100) selon la revendication 1, dans lequel lesdites deux bandes de confinement (130) sont, au moins en partie, en polypropylène.

3. Câble optique (100) selon la revendication 1, dans lequel lesdites deux bandes de confinement (130) comprennent une texture faite de filaments résistant à la traction.

4. Câble optique (100) selon la revendication 3, dans lequel ladite texture est réalisée avec des filaments de fibre de verre.

5. Câble optique (100) selon la revendication 1, dans lequel ladite substance (120) avec des propriétés lubrifiantes est un gel ou de la paraffine.

6. Câble optique (100) selon la revendication 1, dans lequel lesdites fibres optiques (110) de télécommunication, placées côte à côte, sont séparées par des distances différentes, de sorte que ledit câble optique (100) facilite le pliage longitudinal selon des directions définies par les zones de plus grande espacement entre lesdites fibres optiques (110).

7. Procédé d'installation dudit câble optique (100), selon l'une quelconque des revendications précédentes, **caractérisé par** les étapes suivantes :
a. définir un chemin d'installation entre un point générique « A » et un point générique « B » ;
b. dans les sections dudit chemin d'installation, dans lesquelles se trouve un conduit, plier ledit câble optique (100) longitudinalement, selon une ou plusieurs directions longitudinales, et il reste étant plié en permanence pour l'effet de la surface adhésive qui reste à l'intérieur du pli, et puis l'insérer à l'intérieur dudit conduit ;
c. dans les sections où aucune prédisposition n'est présente, maintenir ledit câble optique (100) dans sa configuration aplatie et étendue, et le faire adhérer à la surface où l'installation doit avoir lieu selon le chemin défini à l'étape " a" ;
d. dans les zones d'installation comprises dans les sections dans lesquelles le câble optique (100) est posé en adhérence sur une surface, et donc non à l'intérieur d'un conduit, et dans lesquelles le chemin d'installation prévoit des changements brusques de direction, ou doit suivre des arêtes vives, libérer les fibres optiques uniques (110), contenues dans le câble optique (100), en retirant les bandes de confinement (130);
e. lesdites fibres optiques uniques (110), une fois libérées, sont posées individuellement, s'adaptant au type de chemin envisagé et conservant l'adhérence à la surface de pose ;
f. dans les sections dans lesquelles ledit câble optique (100) est posé en adhérence sur une surface, recouvrir ledit câble optique (100) d'une mince couche de recouvrement générique qui le rend sensiblement invisible.
